# FASCICULE DE BREVET EUROPEEN

(11) **EP 0 498 687 B1**
(45) Date de publication et mention de la délivrance du brevet: **01.03.1995**
(21) Numéro de dépôt: 92400173.8
(22) Date de dépôt: 22.01.1992
(51) Int. Cl.: G01B 15/02, G01N 23/20

(54) **Procédé et système à effet COMPTON pour la localisation d'un plan séparant deux milieux de densités différentes**
Verfahren und System mit Verwendung des Compton Effektes zur Ortung der Trennungsebene zwischen zwei Medien unterschiedlicher Dichte
Method and system using the Compton effect to localise a plane separating two media of different densities

(30) Priorité: 30.01.1991 FR 9101051
(43) Date de publication de la demande: 12.08.1992
(73) Titulaire: AEROSPATIALE Société Nationale Industrielle, 75781 Paris Cédex 16 (FR)
(72) Inventeur: Le Floc'h, Christian Marcel, F-33290 Blanquefort (FR); Babot, Daniel Michel, F-69100 Villeurbanne (FR); Sarrazin, Pierre, F-33100 Bordeaux (FR); Peix, Gilles Georges, F-69100 Villeurbanne (FR)
(74) Mandataire: Bonnetat, Christian

(56) Documents cités:
- EP-A- 0 011 897
- EP-A- 0 380 226
- PATENT ABSTRACTS OF JAPAN vol. 7, no. 48 (P-178)(1193) 24 février 1983 & JP-A-57197410

## Description

La présente invention concerne un procédé et un système permettant d'effectuer des mesures de haute précision de la localisation d'un plan séparant deux milieux de densités différentes, en utilisant l'effet COMPTON, ainsi que leur application à la mesure de l'épaisseur de couches.

On a déjà proposé de mettre en oeuvre l'effet COMPTON pour déterminer la position d'un plan de séparation de deux milieux de densités différentes. Ainsi, dans l'article "COMPTON back-scatter tomography of low atomic number materials with the ComScan system", de Janvier 1989, auteurs J. Kosanetzky, G. Harding, K.H. Fisher, A. Meyer de Philips Forschungslaboratorium Hamburg, on décrit déjà le principe d'utilisation de l'effet COMPTON, ainsi qu'un appareil pour effectuer une tomographie d'un corps en le soumettant à un rayonnement X ou γ qui, par interaction avec les électrons des atomes dudit corps, produit un rayonnement omni-directionnel significatif de la densité du volume irradié dudit corps. Un émetteur de rayonnement produit un pinceau relativement fin qui traverse le corps à étudier, et dont le rayonnement par effet COMPTON est détecté par des récepteurs. Un mécanisme permet de déplacer globalement l'appareil perpendiculairement à la surface du corps par où entre le rayonnement, de façon à réaliser des mesures à diverses profondeurs sous cette surface. On connait aussi le document EP-A-11897 qui décrit un tomographe à rayons X mettant en oeuvre l'effet COMPTON.

Un tel appareil présente cependant l'inconvénient d'utiliser plusieurs émetteurs de rayonnement et plusieurs paires de détecteurs associées. Les détecteurs présentent, par ailleurs, une grande surface dont seulement une faible partie est utile à un instant donné, si bien que la partie inutile produit un bruit de fond au niveau de la chaîne électronique de détection, et, de plus, reçoit des émissions par effet COMPTON ayant subi plusieurs diffusions, dans des volumes du corps non directement irradiés. L'ensemble de ces phénomènes parasites limite la précision de la mesure.

La présente invention vise à obvier ces inconvénients en offrant un procédé et un dispositif améliorant la résolution spatiale des mesures permettant de localiser le plan séparant deux milieux de densités différentes.

A cet effet, selon l'invention, le système de localisation du plan de séparation de deux milieux de densités différentes, par rapport à un plan de référence parallèle audit plan de séparation et à distance fixe de celui-ci, lesdits milieux étant susceptibles d'être irradiés par un faisceau de rayons X ou γ issu d'un émetteur et produisant une diffusion par effet COMPTON qui est détectée par un récepteur fournissant en réponse un premier signal, ledit récepteur étant porté par un support portant aussi l'émetteur, est remarquable en ce que ledit émetteur est à intensité régulée et en ce qu'il comporte de plus :
- une base de temps émettant des commandes de séquencement de cycles d'une succession d'opérations de déplacement, mesure et calcul, une telle succession de cycles correspondant à des mesures relatives à une succession de volumes analysés échelonnés selon une ligne sensiblement perpendiculaire audit plan de référence ;
- un dispositif de déplacement relatif contrôlé dudit support par rapport audit plan de référence, sensiblement perpendiculaire à ce dernier, dispositif commandé par la base de temps ;
- un premier collimateur comportant au moins une fente, fixé sur ledit support et dont le faisceau élémentaire traversant ladite fente est dirigé vers un volume élémentaire de forme allongée parallèlement au plan de séparation de milieux recherché, volume élémentaire que peuvent occuper lesdits milieux, ledit premier collimateur étant situé en sortie de l'émetteur ;
- un second collimateur comportant une pluralité de fentes, fixé sur ledit support, dont les faisceaux élémentaires traversant les fentes convergent vers ledit volume élémentaire, et qui est situé devant le détecteur du récepteur ;
- lesdits support, émetteur, premier et second collimateur et récepteur constituant un ensemble de mesure, dont la position relative par rapport audit plan de référence est identique à celle dudit support ;
- un intégrateur par rapport au temps, commandé par ladite base de temps recevant ledit premier signal et fournissant un deuxième signal représentatif de l'intégrale par rapport au temps, pendant un temps défini par la base de temps, dudit premier signal ;
- un soustracteur, commandé par ladite base de temps, recevant ledit deuxième signal et fournissant en réponse un troisième signal représentatif de la différence entre ledit deuxième signal relatif au cycle en cours et le deuxième signal relatif au cycle précédent ;
- un premier moyen de calcul commandé par ladite base de temps, recevant ledit troisième signal et fournissant en réponse un quatrième signal représentatif de la dérivée dudit troisième signal par rapport à ladite distance de déplacement relatif entre l'ensemble de mesure et le plan de référence ;
- un deuxième moyen de calcul, commandé par ladite base de temps, recevant ledit quatrième signal et fournissant en réponse un cinquième signal représentatif d'un nombre, de valeur absolue égale :
- soit à la différence obtenue en retranchant dudit quatrième signal un nombre positif prédéterminé, lorsque ce résultat est positif,
- soit à zéro, lorsque ce dernier résultat est négatif ou nul,
   et de signe identique à celui du quatrième signal ;
- un troisième moyen de calcul, commandé par ladite base de temps, recevant, sur une première entrée, ledit cinquième signal, et, sur une seconde entrée, la commande issue de la base de temps concernant le déplacement relatif dudit support par rapport au plan de référence et sensiblement perpendiculairement à celui-ci, mémorisant ledit cinquième signal et fournissant, lorsque ledit cinquième signal est nul ou de signe opposé à celui du cinquième signal engendré au cycle précédent, un sixième signal représentatif d'une distance de déplacement de l'ensemble de mesure, par rapport à sa position initiale au début des cycles, distance qui correspond à la position relative du barycentre des distances successives relatives à la dernière succession de cinquièmes signaux non nuls et de même signe calculés lors des cycles précédents, chaque tel cinquième signal d'une telle succession pondérant de sa valeur la distance de déplacement à laquelle se trouvait l'ensemble de mesure de sa position initiale, lors du cycle où a été engendré ce cinquième signal, ledit barycentre étant situé dans un plan de séparation de deux milieux adjacents.

On remarquera que, grâce à la pluralité des fentes dudit second collimateur, on recueille un maximum de photons rétrodiffusés par ledit volume élémentaire, de sorte que le temps de comptage peut être divisé par le nombre des fentes dudit second collimateur.

Par ailleurs, les mesures du rayonnement reçu, qui sont intégrées, comportent moins de bruit, ce qui assure une précision meilleure pour les calculs effectués à partir d'elles. Ces derniers comprennent un calcul de barycentre, qui prend en compte les dernières mesures effectuées proportionnellement à leur importance, ce qui permet de situer avec précision le plan de séparation de milieux adjacents.

De préférence, ledit premier collimateur comporte également une pluralité de fentes et les faisceaux élémentaires traversant lesdites fentes convergent vers ledit volume élémentaire.

De plus, ce système est remarquable en ce qu'il comporte un dispositif de déplacement relatif de l'ensemble de mesure par rapport aux milieux dans une direction parallèle audit plan de référence. On peut ainsi enchaîner automatiquement des suites de cycles de mesures.

Par ailleurs, le système selon l'invention comportant un collimateur ayant une pluralité de fentes, est remarquable en ce que tous les faisceaux élémentaires transmis chacun par l'une des fentes convergent vers un même volume commun dont l'une des dimensions est comprise entre 0,1 mm et 0,4 mm.

De ce fait, le volume élémentaire défini par l'intersection de deux tels volumes a deux dimensions comprises entre 0,1 mm et 0,4 mm, ce qui améliore la précision des mesures

De plus, selon l'invention, le procédé de localisation du plan de séparation de deux milieux de densités différentes, par rapport à un plan de référence parallèle audit plan de séparation et à distance fixe de celui-ci, lesdits milieux étant susceptibles d'être irradiés par un faisceau de rayons X ou γ issu d'un émetteur et produisant une diffusion par effet COMPTON qui est détectée par un récepteur fournissant en réponse un premier signal, ledit récepteur étant porté par un support portant aussi l'émetteur, est remarquable en ce qu'il comporte les étapes suivantes :
- on commande un dispositif de déplacement relatif contrôlé dudit support par rapport audit plan de référence, sensiblement perpendiculairement à ce dernier ;
- on émet un faisceau de rayons X ou γ à intensité régulée, à partir d'un émetteur fixé sur ledit support ;
- on filtre spatialement ledit faisceau par traversée d'un premier collimateur comportant au moins une fente, fixé sur ledit support et dont le faisceau élémentaire traversant ladite fente est dirigé vers un volume élémentaire de forme allongée parallèlement au plan de séparation de milieux recherché, volume élémentaire que peuvent occuper lesdits milieux, ledit premier collimateur étant situé en sortie de l'émetteur ;
- on filtre spatialement du rayonnement par effet COMPTON émis par ledit volume élémentaire, par traversée d'un second collimateur comportant une pluralité de fentes, fixé sur ledit support, et dont les faisceaux élémentaires traversant les fentes convergent vers ledit volume élémentaire, et qui est situé devant le détecteur du récepteur, lesdits support, émetteur, premier et second collimateur et récepteur constituant un ensemble de mesure, dont la position relative par rapport audit plan de référence est identique à celle dudit support ;
- on intègre par rapport au temps ledit premier signal dans un intégrateur, commandé par ladite base de temps recevant ledit premier signal et fournissant un deuxième signal représentatif de l'intégrale par rapport au temps, pendant un temps défini par la base de temps, dudit premier signal ;
- on soustrait, dans un soustracteur commandé par ladite base de temps et recevant ledit deuxième signal, audit deuxième signal relatif au cycle en cours, le deuxième signal relatif au cycle précédent, ce qui donne un troisième signal ;
- on dérive, dans un premier moyen de calcul commandé par ladite base de temps et recevant ledit troisième signal, ledit troisième signal par rapport à ladite distance de déplacement relatif entre l'ensemble de mesure et le plan de référence, ce qui donne un quatrième signal ;
- on calcule, dans un deuxième moyen de calcul, commandé par ladite base de temps et recevant ledit quatrième signal, un nombre, de valeur absolue égale :
- soit à la différence obtenue en retranchant dudit quatrième signal un nombre positif prédéterminé, lorsque ce résultat est positif,
- soit à zéro, lorsque ce dernier résultat est négatif ou nul,
   et de signe identique à celui du quatrième signal, ledit nombre constituant un cinquième signal ;
- on calcule, dans un troisième moyen de calcul, commandé par ladite base de temps, recevant, sur une première entrée, ledit cinquième signal, et, sur une seconde entrée, la commande issue de la base de temps concernant le déplacement relatif dudit support par rapport au plan de référence et sensiblement perpendiculairement à celui-ci, et mémorisant ledit cinquième signal, un sixième signal, lorsque ledit cinquième signal est nul ou de signe opposé à celui du cinquième signal engendré au cycle précédent, ledit sixième signal étant représentatif d'une distance de déplacement de l'ensemble de mesure, par rapport à sa position initiale au début des cycles, distance qui correspond à la position relative du barycentre des distances successives relatives à la dernière succession de cinquièmes signaux non nuls et de même signe calculés lors des cycles précédents, chaque tel cinquième signal d'une telle succession pondérant de sa valeur la distance de déplacement à laquelle se trouvait l'ensemble de mesure de sa position initiale, lors du cycle où a été engendré ce cinquième signal, ledit barycentre étant situé dans un plan de séparation de deux milieux adjacents.

Ainsi, le calcul de la position du plan de séparation de milieux adjacents prend en compte plusieurs mesures successives, ce qui permet d'avoir une précision accrue.

Avantageusement, on utilise un premier collimateur pourvu d'une pluralité de fentes traversées par une pluralité de faisceaux élémentaires convergeant vers ledit volume élémentaire.

Les figures du dessin annexé feront bien comprendre comment l'invention peut être réalisée. Sur ces figures, des références identiques désignent des éléments identiques ou semblables.

La figure 1 représente l'ensemble du système de détermination de la position d'un plan séparant deux milieux de densités différentes, à partir de mesures utilisant l'effet COMPTON.

La figure 2 représente un collimateur comportant une pluralité de fentes, selon l'invention.

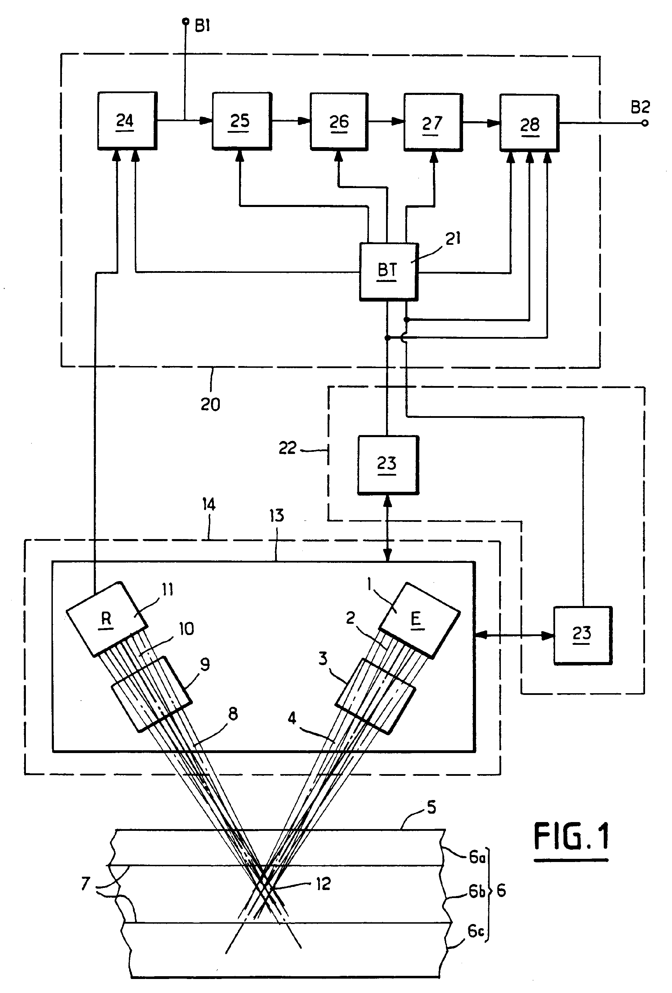

Sur la figure 1, un émetteur E, repéré 1, constitué d'une source blindée et stabilisée, émet un faisceau 2 de rayonnement X ou γ au travers d'un premier collimateur 3 comportant une pluralité de fentes définissant un faisceau incident 4 très étroit constitué d'une pluralité de faisceaux élémentaires, pénétrant au travers d'une face avant servant de plan de référence 5, dans des milieux adjacents à analyser 6a, 6b, 6c, globalement référencés 6, de densités différentes et séparés selon un plan de séparation 7.

La face avant de l'un des milieux servant de plan référence 5 est, dans cet exemple, supposée être plane et parallèle au plan 7 ; si tel n'était pas le cas, tout autre surface ou plan permettant de servir de référence fixe pour les mesures de distances du plan de séparation 7 conviendrait.

Un faisceau 8 de rayonnement diffusé par effet COMPTON atteint un second collimateur 9 comportant une pluralité de fentes définissant un angle solide d'acceptance pour un faisceau détecté 10 reçu par un récepteur R, repéré 11, situé derrière le second collimateur 9. Les deux faisceaux 4 et 10 sont orientés de telle façon qu'ils se coupent et définissent un volume élémentaire 12 que peuvent occuper lesdits milieux 6 et dont l'émission par effet COMPTON est reçue par le récepteur 11.

Pour faciliter les réglages mécaniques et en assurer la stabilité, l'émetteur 1, le récepteur 11 et les deux collimateurs 3 et 9 sont fixés sur un support rigide commun 13, le tout constituant un ensemble de mesure 14. L'ensemble de mesure 14 est ensuite déplacé vis-à-vis des milieux 6 à analyser, ou, inversement, ceux-ci sont déplacés de façon à les explorer à diverses profondeurs et divers endroits sous la face avant 5.

Un ordinateur 20 comporte une base de temps 21 régissant le séquencement de successions de cycles de mesures, chacun relatif à une position donnée dudit volume élémentaire 12 dans les milieux 6. Cette base de temps commande un dispositif de déplacement 22 relatif de l'ensemble de mesure 14 par rapport aux milieux 6, au moyen de moteurs pas-à-pas 23 permettant au moins de faire varier, d'un certain nombre de pas élémentaires, la distance, par rapport à une position initiale, entre l'ensemble de mesure 14 et le plan de référence 5, de façon à effectuer l'une desdites successions de cycles de mesures, et éventuellement de déplacer cet ensemble de mesure 14 selon une ou deux (non représenté) directions parallèles audit plan de référence 5, pour effectuer d'autres successions de cycles de mesures, relatives à des volumes élémentaires situés selon une autre perpendiculaire au plan de référence 5.

En sortie du récepteur 11 se trouve un intégrateur 24, pouvant être situé dans l'ordinateur 20 ou bien à proximité du récepteur 11 pour éviter de recevoir du bruit électrique, et recevant un premier signal, représentatif du nombre de photons reçus par le récepteur 11, et transmis par ce dernier à cet intégrateur 24, qui est sous la commande de ladite base de temps 21. Cet intégrateur 24 fournit, à un soustracteur 25 de l'ordinateur 20, commandé par la base de temps 21, un deuxième signal représentatif de l'intégrale par rapport au temps dudit premier signal. Ce deuxième signal est aussi appliqué à une première borne B1, permettant ainsi à l'utilisateur de disposer dudit deuxième signal qui varie comme la densité du milieu 6 occupant le volume élémentaire 12 analysé. Ce soustracteur 25 mémorise ledit deuxième signal et fournit, à partir de celui-ci, un troisième signal représentatif de la différence entre le deuxième signal qui vient d'être reçu et celui reçu au cycle précédent. Ce troisième signal est appliqué à un premier moyen de calcul 26, commandé par la base de temps 21, qui fournit un quatrième signal représentatif de la dérivée dudit troisième signal par rapport à la distance audit plan de référence 5, en divisant ledit troisième signal par le nombre de pas élémentaires dont vient de se déplacer l'ensemble de mesure 14 en début du cycle en cours. Cette dernière opération de division n'est évidemment nécessaire que si le déplacement de l'ensemble de mesure 14 est susceptible d'avoir des amplitudes différentes d'un cycle sur l'autre.

Ledit quatrième signal est transmis à un deuxième moyen de calcul 27 dudit calculateur 20, commandé par la base de temps 21, et fournissant un cinquième signal, de valeur absolue égale :
- soit à la différence obtenue en retranchant dudit quatrième signal un nombre positif prédéterminé, lorsque ce résultat est positif,
- soit nulle, lorsque le résultat ci-dessus est négatif ou nul,

et de signe identique à celui du quatrième signal.

Ce cinquième signal est appliqué à un troisième moyen de calcul 28 dudit calculateur 20, commandé par la base de temps 21 au travers d'une première entrée, et recevant aussi de celle-ci, sur des deuxième et troisième entrées, les commandes du dispositif de déplacement issues de cette base de temps 21, respectivement selon la direction perpendiculaire au plan de référence 5 et une (ou deux) direction (s) parallèles à ce plan 5. Ce troisième moyen de calcul 28 mémorise ce cinquième signal et fournit, sur une borne B2, lorsque ledit cinquième signal est nul ou de signe opposé à celui du cinquième signal engendré au cycle précédent, un sixième signal représentatif d'une distance de déplacement de l'ensemble de mesure 14, par rapport à sa position initiale au début de la succession des cycles, distance qui correspond à la position relative du barycentre des distances successives relatives à la dernière suite de cinquièmes signaux successifs non nuls et de même signe calculés lors des cycles précédents, chaque tel cinquième signal pondérant de sa valeur la distance de déplacement à laquelle se trouvait l'ensemble de mesure 14 de sa position initiale, lors du cycle où a été engendré ce cinquième signal.

Ledit barycentre, étant représentatif de la position du plan 7 séparant deux milieux de densités différentes, ce sixième signal se trouve ainsi être représentatif de la même façon de la position du plan de séparation 7 de milieux adjacents de densités différentes.

De façon à obtenir une bonne précision dans la détermination du nombre de photons émis par effet COMPTON, différents moyens sont mis en oeuvre.

Tout d'abord, la source de rayonnement X ou γ est une source stable, régulée en intensité de rayonnement, ce qui permet de comparer valablement des résultats obtenus à des instants différents.

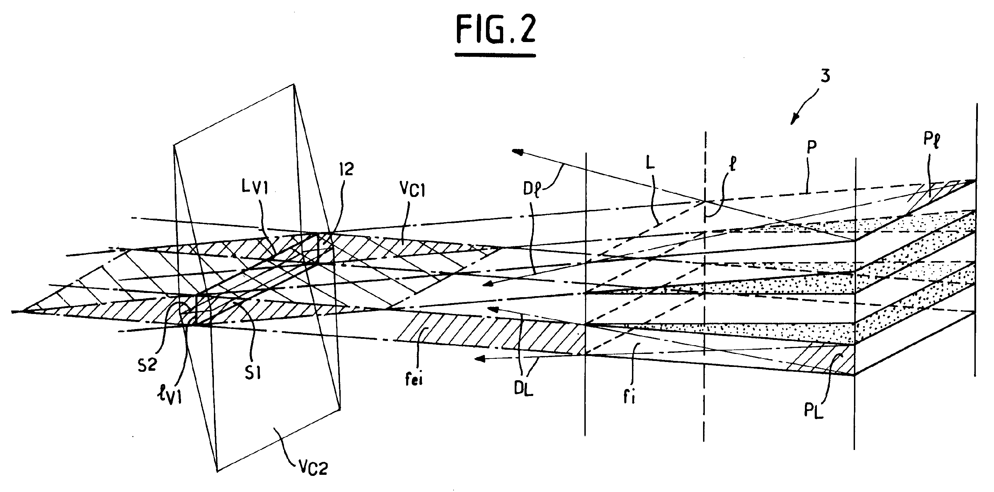

D'autre part, la divergence du faisceau 2 sortant de l'émetteur 1 est réduite par passage au travers du collimateur 3 comportant une pluralité de fentes fi (avec i entier positif), représenté à la figure 2. Chacune de celles-ci a une profondeur P d'environ 200 mm selon la direction de propagation du faisceau, et une section de longueur L d'environ 6 mm et de largeur l de 0,1 à 0,4 mm.

Chaque fente fi est limitée par des parois en métal arrêtant les radiations, la paroi Pl perpendiculaire à la direction de la largeur l étant très mince. Dans un but de clarté, l'échelle relative, entre l, L, P, n'est pas respectée. La divergence du faisceau élémentaire fei (avec i entier positif) de chaque fente fi, dans le plan PL perpendiculaire à la longueur L, est très faible, du fait du rapport très faible entre la largeur l et la profondeur P de la fente fi ; les deux rayons extrêmes sont indiqués chacun par un trait d'axe repéré DL. Dans le plan perpendiculaire Pl à la largeur l de la fente fi, la divergence est au contraire nettement plus grande, du fait que la longueur L présente, vis-à-vis de la profondeur P, un rapport plus élevé que celui présenté par la largeur l ; les deux rayons extrêmes sont indiqués chacun par un trait d'axe repéré Dl. Ainsi, chaque faisceau élémentaire fei présente une section de largeur très faible, de l'ordre de grandeur de la largeur l de la fente fi, alors que sa longueur est beaucoup plus grande, de l'ordre de la longueur L de la fente fi.

La perte d'intensité du rayonnement, correspondant à la différence entre le faisceau incident 2 sur le premier collimateur 3 et le faisceau 4 sortant de celui-ci, est donc surtout due aux rayons absorbés par les deux parois parallèles P1 les plus grandes, perpendiculaires à la direction selon la largeur l de la fente fi.

De façon à disposer d'une intensité totale plus importante au niveau du milieu 6 irradié, le nombre de telles fentes est augmenté, par empilage selon la direction de la largeur l, jusqu'à atteindre environ trente fentes (i = 1 à 30), dont trois sont représentées, ce qui permet de capter, aux pertes près, une grande partie du flux issu de l'ouverture en sortie de l'émetteur 1, et de définir ainsi une trentaine de faisceaux élémentaires fei quasi-parallèles et adjacents selon des plans Pl quasi-parallèles.

Chacune de ces fentes fi est orientée de façon à ce que l'ensemble des faisceaux élémentaires fei traversant respectivement lesdites fentes fi converge sur une même surface S1, parallèle à la face dudit collimateur 3 d'où sort le faisceau 4, de largeur lv, de valeur voisine de la largeur l des fentes fi, et de longueur Lv, de valeur voisine de la longueur L. L'ensemble des faisceaux élémentaires fei traverse un premier volume commun Vc1, contenant ladite surface S1.

Ce volume Vc1 se trouve avoir une forme allongée, de longueur déterminée par la longueur L des fentes.

De façon analogue, le second collimateur 9 est constitué identiquement au premier collimateur 3 et l'ensemble 10 des faisceaux élémentaires fei reçus, transmis par chaque fente fi, définit un second volume Vc2 ayant une surface S2, homologue de S1 et la coupant ou en étant voisine. Les deux volumes Vc1 et Vc2 définissent un volume commun qui est le volume élémentaire 12 à section approximativement en losange, de faible taille, et de longueur s'étendant sur la longueur initiale des faisceaux incident 4 ou reçu 10, déterminée par la longueur L des fentes fi. En entrée du récepteur 11, un détecteur, de surface sensiblement égale à la section du faisceau reçu 10, transforme les photons reçus en un signal électrique constituant ledit premier signal représentatif du nombre de photons reçus.

Le premier et le second collimateur 3 et 9 sont placés de façon telle que la section de sortie de chaque fente fi a sa longueur L disposée parallèlement au plan de référence 5. Ainsi, tous les points dudit volume élémentaire 12 sont situés sensiblement à égale distance de ce plan de référence 5, confondu avec la face avant d'un milieu 6, supposée être parallèle aux plans 7 recherchés séparant les milieux de denstiés différentes. De ce fait, tous les points de ce volume élémentaire 12 situés à une même distance du plan de référence 5 sont dans de la matière de même densité, et ils émettent des signaux identiques que l'on peut cumuler.

Le fonctionnement du système est le suivant. L'ensemble de mesure 14 est placé en une position initiale située à une distance déterminée des milieux 6 à analyser, de façon telle que ledit volume élémentaire 12 puisse être déplacé et traverse le plan 7 séparant lesdits milieux 6, sensiblement perpendiculairement au plan de référence 5.

L'ordinateur 20 va alors gérer, au moyen de la base de temps 21, une succession de cycles de mesure et de calcul, chaque tel cycle étant lié à un déplacement relatif déterminé, par rapport à une position initiale ainsi définie, de l'ensemble de mesure 14 par rapport au plan de référence 5, le déplacement relatif s'effectuant selon une direction sensiblement perpendiculaire audit plan de référence 5 et donc au plan de séparation 7 des milieux 6. L'un desdits cycles est décrit ci-dessous.

La base de temps 21 commande dans un premier temps, au moyen d'une première commande, le déplacement relatif (avance dans l'exemple décrit), de l'ensemble de mesure 14 vis-à-vis des milieux 6, par l'envoi d'un ordre d'avance au moteur 23 pas-à-pas commandant le déplacement dans le sens perpendiculaire au plan de référence 5.

Ensuite, la base de temps 21 commande le début d'intégration de l'intégrateur 24, par envoi à celui-ci d'une deuxième commande constituant un ordre de début d'intégration ; le premier signal, provenant du récepteur 11 est alors intégré par rapport au temps. Une troisième commande, commandant la fin d'intégration, est ensuite transmise par la base de temps 21 audit intégrateur 24 après un temps prédéterminé, ce qui arrête l'intégration. Le signal intégré résultant constitue le deuxième signal qui est reçu par le soustracteur 25.

La base de temps 21 émet alors une troisième commande reçue par le soustracteur 25, qui, tout d'abord, mémorise alors ledit troisième signal dans une mémoire vive. Ledit soustracteur va ensuite aller lire la valeur en mémoire du troisième signal qui vient d'être reçu, ainsi que celle du troisième signal reçu au cyce précédent, ce dernier étant soustrait du troisième signal qui vient d'être reçu, par exemple sous forme numérique, et le résultat est un quatrième signal représentant la dérivée dudit troisième signal par rapport à la longueur du déplacement commandé en début du cycle en cours. Si la longueur de ce déplacement est susceptible de varier d'un cycle à l'autre, ledit troisième signal est alors divisé par ladite longueur de déplacement en début du cycle en cours, ce qui fournit dans ce cas ledit quatrième signal représentatif de la dérivée dudit troisième signal par rapport à la longueur mesurée selon la direction de déplacement.

La base de temps 21 émet ensuite une quatrième commande reçue par le deuxième moyen de calcul 27 qui, à partir du quatrième signal, fournit un cinquième signal, comme expliqué précédemment, correspondant à l'excédent du quatrième signal vis-à-vis dudit nombre positif prédéterminé et qui constitue un seuil.

La base du temps 21 transmet ensuite une cinquième commande au troisième moyen de calcul 28, qui mémorise alors ledit cinquième signal puis effectue éventuellement le calcul de barycentre, comme expliqué précédemment, et fournit alors ledit sixième signal sur la borne B2, représentatif de la position relative d'un plan 7 séparant deux milieux de densités différentes, exprimée sous forme de la valeur du déplacement relatif de l'ensemble de mesure 14 par rapport aux milieux 6 selon la direction perpendiculaire au plan de séparation 7 des milieux.

De façon à disposer d'une référence absolue de position, le troisième moyen de calcul 28 peut traduire le déplacement de l'ensemble de mesure 14 par rapport à sa position initiale en un déplacement par rapport au plan de référence 5, pris, par exemple, comme étant la face avant d'un milieu 6, dans la mesure où elle est plane et parallèle aux plans de séparation 7.

La position initiale du volume élémentaire 12 peut aussi servir de référence, sa distance à l'ensemble de mesure 14 étant fixe et connue par triangulation des deux faisceaux 4 et 10.

Une autre méthode consiste à faire passer le volume élémentaire 12 à travers la face avant du milieu 6, ce qui apporte une précision égale aux déterminations ultérieures de positions de plans de séparation 7 et évite ainsi les erreurs de mesure de distance entre l'ensemble de mesure 14 et le plan de référence 5 constitué de la face avant d'un milieu 6.

La succession de déterminations des positions des divers plans de séparation 7 des milieux permet, par calcul de la différence des positions relatives desdits plans de séparation 7, de déduire l'épaisseur de chacun des milieux et sa position précise.

## Revendications

1. Système de localisation du plan de séparation (7) de deux milieux (6) de densités différentes, par rapport à un plan de référence (5) parallèle audit plan de séparation (7) et à distance fixe de celui-ci, lesdits milieux étant susceptibles d'être irradiés par un faisceau (2) de rayons X ou Y issu d'un émetteur (1) à la sortie duquel est placé un premier collimateur (3) et produisant une diffusion par effet COMPTON qui est détectée par un récepteur (11) fournissant en réponse un premier signal et à l'entrée duquel est placé un second collimateur (9), ledit récepteur (11) étant porté par un support (13) mû par un dispositif de déplacement (22), et ledit système comportant un dispositif de traitement dudit premier signal,
caractérisé en ce que :
- ledit émetteur est à intensité régulée ;
- une base de temps (21) émet des commandes de séquencement de cycles d'une succession d'opérations de déplacement, mesure et calcul, une telle succession de cycles correspondant à des mesures relatives à une succession de volumes analysés échelonnés selon une ligne sensiblement perpendiculaire audit plan de référence (5) ;
- ledit dispositif de déplacement (22) est commandé par la base de temps (21) et contrôle le déplacement relatif dudit support (13) par rapport audit plan de référence (5), sensiblement perpendiculairement à ce dernier ;
- ledit premier collimateur (3) comporte au moins une fente (fi), il est fixé sur ledit support (13) et son faisceau élémentaire (fei) traversant ladite fente (fi) est dirigé vers un volume élémentaire (12) de forme allongée parallèlement au plan de séparation (7) de milieux (6) recherché, volume élémentaire (12) que peuvent occuper lesdits milieux (6) ;
- ledit second collimateur (9) comportant une pluralité de fentes (fi), et ses faisceaux élémentaires (fei) traversant les fentes (fi) convergent vers ledit volume élémentaire (12) ;
- ledit support (13), ledit émetteur (1), lesdits premier (3) et second (9) collimateurs et ledit récepteur (11) constituent un ensemble de mesure (14), dont la position relative par rapport audit plan de référence (5) est identique à celle dudit support (13) ;
- un intégrateur (24) par rapport au temps, commandé par ladite base de temps (21), reçoit ledit premier signal et fournit un deuxième signal représentatif de l'intégrale par rapport au temps, pendant un temps défini par la base de temps (21), dudit premier signal ;
- un soustracteur (25), commandé par ladite base de temps (21), reçoit ledit deuxième signal et fournit en réponse un troisième signal représentatif de la différence entre ledit deuxième signal relatif au cycle en cours et le deuxième signal relatif au cycle précédent ;
- un premier moyen de calcul (26), commandé par ladite base de temps (21), reçoit ledit troisième signal et fournit en réponse un quatrième signal représentatif de la dérivée dudit troisième signal par rapport à la distance de déplacement relatif entre l'ensemble de mesure (14) et le plan de référence (5) ;
- un deuxième moyen de calcul (27), commandé par ladite base de temps (21), reçoit ledit quatrième signal et fournit, en réponse, un cinquième signal représentatif d'un nombre, de valeur absolue égale :
- soit à la différence obtenue en retranchant dudit quatrième signal un nombre positif prédéterminé, lorsque ce résultat est positif,
- soit à zéro, lorsque ce dernier résultat est négatif ou nul,
et de signe identique à celui du quatrième signal ;
- un troisième moyen de calcul (28), commandé par la base de temps (21), reçoit, sur une première entrée, ledit cinquième signal, et, sur une seconde entrée, la commande issue de la base de temps (21) concernant le déplacement relatif dudit support (13) par rapport au plan de référence (5) et sensiblement perpendiculairement à celui-ci, mémorise ledit cinquième signal et fournit, lorsque ledit cinquième signal est nul ou de signe opposé à celui du cinquième signal engendré au cycle précédent, un sixième signal représentatif d'une distance de déplacement de l'ensemble de mesure (14), par rapport à sa position initiale au début de ladite succession de cycles, distance qui correspond à la position relative du barycentre des distances successives relatives à la dernière succession de cinquièmes signaux non nuls et de même signe calculés lors des cycles précédents, chaque tel cinquième signal d'une telle succession pondérant de sa valeur la distance de déplacement à laquelle se trouvait l'ensemble de mesure (14) de sa position initiale, lors du cycle où a été engendré ce cinquième signal, ledit barycentre étant situé dans un plan de séparation (7) de deux milieux (6) adjacents.

2. Système selon la revendication 1,
caractérisé en ce que ledit premier collimateur (3) comporte une pluralité de fentes et en ce que les faisceaux élémentaires traversant lesdites fentes convergent vers ledit volume élémentaire (12).

3. Système selon l'une des revendications 1 ou 2,
caractérisé en ce qu'il comporte un dispositif de déplacement (22) relatif de l'ensemble de mesure (14) par rapport aux milieux (6) dans une direction parallèle audit plan de référence (5).

4. Système selon l'une des revendications 1 à 3,
caractérisé en ce que tous les faisceaux élémentaires (fei) (avec i = 1, 2, 3, etc...), transmis chacun par l'une des fentes (fi), convergent vers un même volume commun (Vc1, Vc2) dont l'une des dimensions est comprise entre 0,1 mm et 0,4 mm.

5. Procédé de localisation du plan de séparation (7) de deux milieux (6) de densités différentes, par rapport à un plan de référence (5) parallèle audit plan de séparation (7) et à distance fixe de celui-ci, lesdits milieux (6) étant susceptibles d'être irradiés par un faisceau (2) de rayons X ou γ issu d'un émetteur (1) produisant une diffusion par effet COMPTON qui est détectée par un récepteur (11) fournissant en réponse un premier signal, ledit récepteur (11) étant porté par un support (13) mû par un dispositif de déplacement (22), ledit premier signal étant traité par un dispositif de traitement et ledit faisceau (3) de rayons X ou γ ainsi que le rayonnement par effet COMPTON étant filtrés spatialement,
caractérisé en ce qu'il est constitué par une succession de cycles correspondant à des mesures relatives à une succession de volumes analysés échelonnés selon une ligne sensiblement perpendiculaire audit plan de référence (5), chaque cycle comportant les étapes suivantes :
- on commande un dispositif de déplacement (22) relatif contrôlé dudit support (13) par rapport audit plan de référence (5), sensiblement perpendiculairement à ce dernier ;
- on émet un faisceau (2) de rayons X ou γ à intensité régulée, à partir d'un émetteur (1) fixé sur ledit support (13) ;
- on filtre spatialement ledit faisceau (2) par traversée d'un premier collimateur (3) comportant au moins une fente (fi), fixé sur ledit support (13) et dont le faisceau élémentaire (fei) traversant ladite fente (fi) est dirigé vers un volume élémentaire (12) de forme allongée parallèlement au plan de séparation (7) de milieux (6) recherché, volume élémentaire (12) que peuvent occuper lesdits milieux (6), ledit premier collimateur (3) étant situé en sortie de l'émetteur (1) ;
- on filtre spatialement du rayonnement par effet COMPTON émis par ledit volume élémentaire (12), par traversée d'un second collimateur (9) comportant une pluralité de fentes (fe), fixé sur ledit support (13), dont les faisceaux élémentaires (fei) traversant les fentes (fi) convergent vers ledit volume élémentaire (12), et qui est situé devant le détecteur du récepteur (11), lesdits support (13), émetteur (1), premier (3) et second (9) collimateur et récepteur (11) constituant un ensemble de mesure (14), dont la position relative par rapport audit plan de référence (5) est identique à celle dudit support (13) ;
- on intègre, par rapport au temps, ledit premier signal dans un intégrateur (24) par rapport au temps, commandé par la base de temps (21), recevant ledit premier signal et fournissant un deuxième signal représentatif de l'intégrale par rapport au temps, pendant un temps défini par la base de temps (21), dudit premier signal ;
- on soustrait, dans un soustracteur (25) commandé par ladite base de temps (21) et recevant ledit deuxième signal, audit deuxième signal relatif au cycle en cours, le deuxième signal relatif au cycle précédent, ce qui donne un troisième signal ;
- on dérive, dans un premier moyen de calcul (26) commandé par ladite base de temps (21) et recevant ledit troisième signal, ledit troisième signal par rapport à la distance de déplacement relatif entre l'ensemble de mesure (14) et le plan de référence (5), ce qui donne un quatrième signal ;
- on calcule, dans un deuxième moyen de calcul (27), commandé par ladite base de temps (21) et recevant ledit quatrième signal, un nombre, de valeur absolue égale :
- soit à la différence obtenue en retranchant dudit quatrième signal un nombre positif prédéterminé, lorsque ce résultat est positif,
- soit à zéro, lorsque ce dernier résultat est négatif ou nul,
et de signe identique à celui du quatrième signal, ledit nombre constituant un cinquième signal ;
- on calcule, dans un troisième moyen de calcul (28), commandé par ladite base de temps (21), recevant, sur une première entrée, ledit cinquième signal, et, sur une seconde entrée, la commande issue de la base de temps (21) concernant le déplacement relatif dudit support (13) par rapport au plan de référence (5) et sensiblement perpendiculairement à celui-ci, et mémorisant ledit cinquième signal, un sixième signal, lorsque ledit cinquième signal est nul ou de signe opposé à celui du cinquième signal engendré au cycle précédent, ledit sixième signal étant représentatif d'une distance de déplacement de l'ensemble de mesure (14), par rapport à sa position initiale au début de ladite succession de cycles, distance qui correspond à la position relative du barycentre des distances successives relatives à la dernière succession de cinquièmes signaux non nuls et de même signe calculés lors des cycles précédents, chaque tel cinquième signal d'une telle succession pondérant de sa valeur la distance de déplacement à laquelle se trouvait l'ensemble de mesure (14) de sa position initiale, lors du cycle où a été engendré ce cinquième signal, ledit barycentre étant situé dans un plan de séparation (7) de deux milieux (6) adjacents.

6. Procédé selon la revendication 5,
caractérisé en ce qu'on utilise un premier collimateur (3) pourvu d'une pluralité de fentes traversées par une pluralité de faisceaux élémentaires convergeant vers ledit volume élémentaire (12).

## Patentansprüche

1. System zur Lokalisierung der Trennungsebene (7) zwischen zwei Medien (6) unterschiedlicher Dichte gegenüber einer parallel zur Trennungsebene (7) und in einem unveränderlichen Abstand zu dieser verlaufenden Referenzebene (5), wobei die Medien von einem Röntgen- oder Gammastrahlenbündel (2) aus einem Strahler (1) bestrahlt werden können, an dessen Ausgang sich ein erster Kollimator (3) befindet und der eine Compton-Effekt-Streuung erzeugt, die durch einen Empfänger (11) erfaßt wird, der als Reaktion ein erstes Signal abgibt und an dessen Eingang sich ein zweiter Kollimator (9) befindet, wobei sich der Empfänger (11) auf einer Unterlage (13) befindet, die durch eine Verschiebungsvorrichtung (22) bewegt wird, und das System eine Verarbeitungsvorrichtung des ersten Signals umfaßt,
dadurch gekennzeichnet, daß:
- die Intensität des Strahlers geregelt ist;
- eine Zeitbasis (21) Ablaufbefehle für Verschiebungs-, Meß- und Rechenfolgezyklen abgibt, wobei eine solche Zyklusfolge Messungen einer Folge von Untersuchungsvolumen, die nach einer annähernd senkrecht zur Referenzebene (5) verlaufenden Linie gestaffelt sind, entspricht;
- die Verschiebungsvorrichtung (22) durch die Zeitbasis (21) gesteuert wird und die relative Verschiebung der Unterlage (13) gegenüber der Referenzebene (5) annähernd senkrecht zu dieser kontrolliert;
- der erste Kollimator (3) wenigstens einen Spalt (fi) hat, auf der Unterlage (13) befestigt ist und sein durch den Spalt (fi) gelangendes Elementarbündel (fei) auf ein Elementarvolumen (12) von länglicher Form parallel zur gesuchten Trennungsebene (7) zwischen den Medien (6), das von den Medien (6) eingenommen werden kann, gerichtet ist;
- der zweite Kollimator (9) eine Vielzahl von Spalten (fi) hat und seine durch die Spalte (fi) gelangenden Elementarbündel (fei) zum Elementarvolumen (12) konvergieren;
- die Unterlage (13), der Strahler (1), der erste (3) und der zweite (9) Kollimator und der Empfänger (11) eine Meßeinheit (14) bilden, deren relative Lage gegenüber der Referenzebene (5) mit der der Unterlage (13) identisch ist;
- ein Zeitintegrator (24), der von der Zeitbasis (21) gesteuert wird, das erste Signal erhält und ein zweites Signal abgibt, das für das Zeitintegral des ersten Signals während einer von der Zeitbasis (21) definierten Zeit repräsentativ ist;
- ein Subtrahierer (25), der von der Zeitbasis (21) gesteuert wird, das zweite Signal erhält und als Reaktion ein drittes Signal abgibt, das für die Differenz zwischen dem zweiten Signal des laufenden Zyklus und dem zweiten Signal des vorangegangenen Zyklus repräsentativ ist;
- ein erstes Rechenmittel (26), das von der Zeitbasis (21) gesteuert wird, das dritte Signal erhält und als Reaktion ein viertes Signal abgibt, das für die Ableitung des dritten Signals bezogen auf den relativen Verschiebungsweg zwischen der Meßeinheit (14) und der Referenzebene (5) repräsentativ ist;
- ein zweites Rechenmittel (27), das von der Zeitbasis (21) gesteuert wird, das vierte Signal erhält und als Reaktion ein fünftes Signal abgibt, das für eine Zahl, deren absoluter Wert
- entweder gleich der Differenz ist, die sich bei Abzug einer vorbestimmten positiven Zahl vom vierten Signal ergibt, wenn dieses Ergebnis positiv ist,
- oder gleich Null ist, wenn dieses Ergebnis negativ oder Null ist,
und mit einem Vorzeichen gleich dem des vierten Signals repräsentativ ist;
- ein drittes Rechenmittel (28), das von der Zeitbasis (21) gesteuert wird, an einem ersten Eingang das fünfte Signal und an einem zweiten Eingang den Befehl der Zeitbasis (21) zur relativen Verschiebung der Unterlage (13) gegenüber der Referenzebene (5) annähernd senkrecht zu dieser erhält, das fünfte Signal speichert und, wenn das fünfte Signal Null ist oder ein dem fünften Signal des vorangegangenen Zyklus entgegengesetztes Vorzeichen hat, ein sechstes Signal erzeugt, das für einen Verschiebungsweg der Meßeinheit (14) gegenüber ihrer Ausgangslage zu Beginn der Zyklusfolge repräsentativ ist, wobei der Verschiebungsweg der relativen Lage des Schwerpunkts der aufeinanderfolgenden Wege für die letzte Folge fünfter Signale ungleich Null mit gleichem Vorzeichen entspricht, die in den vorangegangenen Zyklen berechnet wurden, jedes fünfte Signal einer solchen Folge mit seinem Wert den Verschiebungsweg wichtet, den die Meßeinheit (14) aus ihrer Ausgangslage während des Zyklus genommen hat, in dem dieses fünfte Signal erzeugt wurde, und sich der Schwerpunkt in einer Trennungsebene (7) zwischen zwei aneinandergrenzenden Medien (6) befindet.

2. System nach Anspruch 1,
dadurch gekennzeichnet, daß der erste Kollimator (3) eine Vielzahl von Spalten hat, und dadurch, daß die durch die Spalten hindurchtretenden Elementarbündel nach dem Elementarvolumen (12) konvergieren.

3. System nach einem der Ansprüche 1 oder 2,
dadurch gekennzeichnet, daß es eine Vorrichtung (22) zur relativen Verschiebung der Meßeinheit (14) gegenüber Medien (6) in einer Richtung parallel zur Referenzebene (5) umfaßt:

4. System nach einem der Ansprüche 1 bis 3,
dadurch gekennzeichnet, daß alle Elementarbündel (fei) (mit i = 1, 2, 3 usw.), die jeweils durch einen der Spalte (fi) übertragen werden, zu einem gemeinsamen Volumen (Vc1, Vc2) konvergieren, dessen eine Abmessung zwischen 0,1 mm und 0,4 mm liegt.

5. Verfahren zur Lokalisierung der Trennungsebene (7) zwischen zwei Medien (6) unterschiedlicher Dichte gegenüber einer parallel und in unveränderlichem Abstand zur Trennungsebene (7) verlaufenden Referenzebene (5), wobei die Medien (6) von einem Röntgen- oder Gammastrahlenbündel (2) aus einem Strahler (1) unter Erzeugung einer Compton-Effekt-Streuung bestrahlt werden können, die von einem Empfänger (11) erfaßt wird, der als Reaktion ein erstes Signal abgibt, wobei sich der Empfänger (11) auf einer Unterlage (13) befindet, die von einer Verschiebungsvorrichtung (22) bewegt wird, das erste Signal von einer Verarbeitungsvorrichtung verarbeitet und das Röntgen- oder Gammastrahlenbündel (3) sowie die Compton-Effekt-Strahlung räumlich gefiltert werden,
dadurch gekennzeichnet, daß es aus einer Folge von Zyklen besteht, die Messungen einer Folge von Untersuchungsvolumen entsprechen, die nach einer annähernd senkrecht zur Referenzebene (5) verlaufenden Linie gestaffelt sind, wobei jeder Zyklus folgende Stufen umfaßt:
- Steuerung einer Vorrichtung (22) zur kontrollierten relativen Verschiebung der Unterlage (13) gegenüber der Referenzebene (5), annähernd senkrecht zu derselben;
- durch einen Strahler (1) auf der Unterlage (13) Abgabe eines Röntgen- oder Gammastrahlenbündels (2) mit geregelter Intensität;
- räumliche Filterung des Bündels (2) durch einen ersten Kollimator (3) mit wenigstens einem Spalt (fi), der auf der Unterlage (13) befestigt ist und dessen durch den Spalt (fi) hindurchtretendes Elementarbündel (fei) auf ein Elementarvolumen (12) von länglicher Form gerichtet ist, das parallel zur gesuchten Trennungsebene (7) zwischen den Medien (6) verläuft und von den Medien (6) eingenommen werden kann, wobei sich der erste Kollimator (3) am Ausgang des Strahlers (1) befindet;
- räumliche Filterung der vom Elementarvolumen (12) abgegebenen Compton-Effekt-Strahlung durch einen zweiten Kollimator (9) mit einer Vielzahl von Spalten (fe), der auf der Unterlage (13) befestigt ist, dessen durch die Spalten (fi) gelangende Elementarbündel (fei) nach dem Elementarvolumen (12) konvergieren und der sich vor dem Detektor von Empfänger (11) befindet, wobei die Unterlage (13), der Strahler (1), der erste (3) und der zweite (9) Kollimator und der Empfänger (11) eine Meßeinheit (14) bilden, deren relative Lage gegenüber der Referenzebene (5) mit der der Unterlage (13) identisch ist;
- Zeitintegration des ersten Signals in einem Zeitintegrator (24), der von der Zeitbasis (21) gesteuert wird, das erste Signal erhält und ein zweites Signal abgibt, das für das Zeitintegral des ersten Signals während einer von der Zeitbasis (21) definierten Zeit repräsentativ ist;
- in einem von der Zeitbasis (21) gesteuerten Subtrahierer (25), an den das zweite Signal gelangt, Subtraktion des zweiten Signals des vorangegangenen Zyklus vom zweiten Signal des laufenden Zyklus, so daß sich ein drittes Signal ergibt;
- in einem ersten Rechenmittel (26), das von der Zeitbasis (21) gesteuert wird und an das das dritte Signal gelangt, Ableitung des dritten Signals nach dem relativen Verschiebungsweg zwischen der Meßeinheit (14) und der Referenzebene (5), so daß sich ein viertes Signal ergibt;
- in einem zweiten Rechenmittel (27), das von der Zeitbasis (21) gesteuert wird und an das das vierte Signal gelangt, Berechnung einer Zahl, deren absoluter Wert
- entweder gleich der Differenz ist, die sich bei Abzug einer vorbestimmten positiven Zahl vom vierten Signal ergibt, wenn dieses Ergebnis positiv ist,
- oder gleich Null ist, wenn dieses Ergebnis negativ oder Null ist,
und mit einem Vorzeichen gleich dem des vierten Signals, wobei die Zahl ein fünftes Signal darstellt;
- in einem dritten Rechenmittel (28), das von der Zeitbasis (21) gesteuert wird, an das an einem ersten Eingang das fünfte Signal und an einem zweiten Eingang der Befehl der Zeitbasis (21) für die relative annähernd senkrechte Verschiebung der Unterlage (13) gegenüber der Referenzebene (5) gelangt und das dieses fünfte Signal speichert, Berechnung eines sechsten Signals, wenn das fünfte Signal Null ist oder ein Vorzeichen entgegengesetzt dem des im vorangegangenen Zyklus erzeugten fünften Signals hat, wobei das sechste Signal für einen Verschiebungsweg der Meßeinheit (14) gegenüber ihrer Ausgangslage zu Beginn der Zyklusfolge repräsentativ ist, der Verschiebungsweg der relativen Lage des Schwerpunkts der aufeinanderfolgenden Verschiebungswege für die letzte Folge fünfter Signale ungleich Null mit gleichem Vorzeichen, die in den vorangegangenen Zyklen berechnet wurden, entspricht, jedes derartige fünfte Signal einer solchen Folge durch seinen Wert den Verschiebungsweg wichtet, den die Meßeinheit (14) während des Zyklus, in dem dieses fünfte Signal erzeugt wurde, aus ihrer Ausgangslage zurückgelegt hat, und der Schwerpunkt in einer Trennungsebene (7) zwischen zwei aneinandergrenzenden Medien (6) liegt.

6. Verfahren nach Anspruch 5,
dadurch gekennzeichnet, daß ein erster Kollimator (3) mit einer Vielzahl von Spalten für eine Vielzahl von Elementarbündeln verwendet wird, die nach dem Elementarvolumen (12) konvergieren.

## Claims

1. A system for locating the separation plane (7) between two media (6) of different densities, relative to a reference plane (5) parallel to said separation plane (7) and at a fixed distance therefrom, said media being suitable for being irradiated by a beam (2) of X-rays or of gamma rays from an emitter (1) at the outlet of which is placed a first collimator (3), and producing scattering by the Compton effect, which scattering is detected by a receiver (11) that responds thereto by providing a first signal and at the inlet of which is placed a second collimator (9), said receiver (11) being carried by a support (13) provided with displacement apparatus (22), and said system including processing apparatus for processing said first signal; the system being characterized in that:
said emitter emits at regulated intensity; and
a time base (21) emits sequencing commands for cycles in a sequence of displacement, measurement, and calculation operations, with one such sequence of cycles corresponding to measurements relating to a sequence of analyzed volumes disposed along a line substantially perpendicular to said reference plane (5);
said displacement apparatus (22) is controlled by the time base (21) and controls the relative displacement of said support (13) relative to said reference plane (5) and substantially perpendicular thereto;
said first collimator (3) includes at least one slot (fi), said collimator being fixed on said support (13) with its elementary beam (fei) passing through said slot (fi) and directed towards an elementary volume (12) of elongate shape extending parallel to the looked-for separation plane (7) between the media (6), which elementary volume (12) is capable of being occupied by said media (6);
said second collimator (9) including a plurality of slots (fi), with its elementary beams (fei) passing through the slots (fi) converging on said elementary volume (12);
said support (13), said emitter (1), said first and second collimators (3, 9), and said receiver (11) constituting a measurement assembly (14) whose position relative to said reference plane (5) is identical to that of said support (13);
an integrator (24) for integrating relative to time and under the control of said time base (21), said integrator receiving said first signal and providing a second signal representative of the time integral of said first signal over a time period defined by the time base (21);
a subtracter (25) controlled by said time base (21), receiving said second signal and responding thereto by providing a third signal representative of the difference between said second signal relating to the current cycle and the second signal relating to the preceding cycle;
first calculation means (26) controlled by said time base (21), receiving said third signal and responding thereto by providing a fourth signal representative of the derivative of said third signal relative to the relative displacement distance between the measurement assembly (14) and the reference plane (5);
second calculation means (27) controlled by said time base (21), receiving said fourth signal and responding thereto by providing a fifth signal representative of a number having the same sign as the fourth signal and whose absolute value is equal either:
to the difference obtained by subtracting a predetermined positive number from said fourth signal, so long as the result is positive; or else
to zero whenever said result is negative or zero;
third calculation means (28) controlled by said time base (21), having a first input receiving said fifth signal and having a second input receiving the command issued by the time base (21) for causing relative displacement of said support (13) relative to the reference plane (5) in a direction substantially perpendicular thereto, said third calculation means storing said fifth signal and, whenever said fifth signal is zero or opposite in sign to the fifth signal generated during the preceding cycle, providing a sixth signal representative of a displacement distance of the measurement assembly (14) relative to its initial position at the beginning of said sequence of cycles, which distance corresponds to the relative position of the center of gravity of successive distances relating to the most recent sequence of non-zero and same-sign fifth signals calculated during the preceding cycles, with the value of each such fifth signal of such a sequence weighting the displacement distance at which the measurement assembly (14) is to be found from its initial position during the cycle in which said fifth signal is generated, said center of gravity being situated in a separation plane (7) between two adjacent media (6).

2. A system according to claim 1, characterized in that said first collimator (3) includes a plurality of slots, and in which the elementary beams passing through said slots converge on said elementary volume (12).

3. A system according to claim 1 or 2, characterized in that it includes apparatus (22) for displacing the measurement assembly (14) relative to the media (6) in a direction parallel to said reference plane (5).

4. A system according to any one of claims 1 to 3, characterized in that all of the elementary beams (fei) (where i = 1, 2, 3, etc. ...), each transmitted via one of the slots (fi) are concentrated in the same common volume (Vc1, Vc2), one of whose dimensions lies in the range 0.1 mm to 0.4 mm.

5. A method of localizing the separation plane (7) between two media (6) of different densities, relative to a reference plane (5) parallel to said separation plane (7) and at a fixed distance therefrom, said media (6) being suitable for being irradiated by a beam (2) of X-rays or of gamma rays from an emitter (1) and producing Compton effect scattering that is detected by a receiver (11) which responds thereto by providing a first signal, said receiver (11) being carried by a support (13), provided with displacement apparatus (22), said first signal being processed by processing apparatus and said beam (3) of X-rays or of gamma rays and the Compton effect radiation being spatially filtered the method being characterized in that it is constituted by a sequence of cycles corresponding to measurements relating to a sequence of analyzed volumes spaced apart along a line substantially perpendicular to said reference plane (5), each cycle including the following steps:
controlling a displacement apparatus (22) to obtain controlled displacement of said support (13) relative to said reference plane (5) in a direction substantially perpendicular thereto;
emitting a beam (2) of X-rays or of gamma rays at regulated intensity from an emitter (1) fixed on said support (13);
spatially filtering said beam (2) by passing it through a first collimator (3) that includes at least one slot (fi), the collimator being fixed on said support (13) and the elementary beam (fei) passing through said slot (fi) being directed towards an elementary volume (12) of elongate shape extending parallel to the looked-for separation plane (7) between the media (6), which elementary volume (12) is capable of being occupied by said media (6), said first collimator (3) being situated at the outlet from the emitter (1);
spatially filtering the Compton effect radiation emitted by said elementary volume (12) by passing the radiation through a second collimator (9) that includes a plurality of slots (fe), the second collimator being fixed on said support (13), the slots (fi) converging on said elementary volume (12) such that the elementary beams (fei) passing through the slots (fi) are concentrated in said elementary volume (12), the collimator being situated in front of the detector of the receiver (11), said support (13), said emitter (1), said first and second collimators (3, 9) and said receiver (11) constituting a measurement assembly (14) whose position relative to the said reference plane (5) is identical to that of said support (13);
integrating said first signal relative to time in an integrator (24) for performing integration relative to time under the control of the time base (21), which integrator receives said first signal and provides a second signal representative of the time integral of said first signal over a time period defined by the time base (21);
subtracting the second signal relating to the preceding cycle from said second signal relating to the current cycle in a subtracter (25) controlled by said time base (21) and receiving said second signal, thereby obtaining a third signal;
differentiating said third signal relative to the relative displacement distance between the measurement assembly (14) and the reference plane (5) in a first calculation means (26) controlled by said time base (21) and receiving said third signal, thereby obtaining a fourth signal;
calculating a number in a second calculation means (27) controlled by said time base (21) and receiving said fourth signal the sign of said number being identical to that of the fourth signal, and its absolute value being equal either to the difference obtained by subtracting a predetermined positive number from said fourth signal, when the result of the subtraction is positive, or else is equal to zero when said result is negative or zero, thereby obtaining a fifth signal;
calculating a sixth signal in a third calculation means (28) controlled by said time base (21) and having a first input receiving said fifth signal and a second input receiving the command issued by the time base (21) to cause relative displacement of said support (13) relative to the reference plane (5) and substantially perpendicular thereto, the third calculation means storing said fifth signal and generating said sixth signal when said fifth signal is zero or of opposite sign to the fifth signal generated during the preceding cycle, said sixth signal being representative of a displacement distance of the measurement assembly (14) relative to its initial position at the beginning of said sequence of cycles, which distance corresponds to the relative position of the center of gravity of successive distances relating to the most recent sequence of non-zero fifth signals of the same sign calculated during the preceding cycles, the value of each such fifth signal of such a sequence weighting the displacement distance at which the measurement assembly is to be found from its initial position during the cycle in which said fifth signal is generated, said center of gravity being situated in a separation plane (7) between two adjacent media (6).

6. A method according to claim 5, characterized in that a first collimator (3) is used that is provided with a plurality of slots conveying a plurality of elementary beams converging on said elementary volume (12).
